# EUROPEAN PATENT SPECIFICATION

(11) **EP 3 910 275 B1**
(45) Date of publication and mention of the grant of the patent: **23.08.2023**
(21) Application number: 21171964.6
(22) Date of filing: 04.05.2021
(51) Int. Cl.: F28D 15/04

(54) **LOOP-TYPE HEAT PIPE**
SCHLEIFENWÄRMEROHR
CALODUC DE TYPE BOUCLE

(30) Priority: 12.05.2020 JP 2020083973
(43) Date of publication of application: 17.11.2021
(73) Proprietor: SHINKO ELECTRIC INDUSTRIES CO., LTD., Nagano-shi, Nagano 381-2287 (JP)
(72) Inventor: MACHIDA, Yoshihiro, Nagano, 381-2287 (JP)
(74) Representative: Zimmermann & Partner Patentanwälte mbB

(56) References cited:
- CN-A- 108 267 037
- US-A- 6 058 711
- US-A1- 2008 164 010
- US-B2- 7 380 585
- US-B2- 8 705 236

## Description

### TECHNICAL FIELD

The present disclosure relates to a loop-type heat pipe.

### BACKGROUND ART

In the related art, a heat pipe is known as a device configured to cool a heat generation component such as a CPU (Central Processing Unit) mounted on an electronic device. The heat pipe is a device configured to transport heat by using a phase change of an operating fluid.

As the heat pipe, a loop-type heat pipe including an evaporator configured to vaporize an operating fluid by heat of a heat generation component and a condenser configured to condense the vaporized operating fluid where the evaporator and the condenser are connected to each other by a liquid pipe and a vapor pipe forming a loop-shaped flow path may be exemplified. In the loop-type heat pipe, the operating fluid flows in one direction in the loop-shaped flow path.

The evaporator and the liquid pipe of the loop-type heat pipe are each provided therein with a porous body, so that the operating fluid in the liquid pipe is guided to the evaporator with a capillary force generated in the porous bodies and the vapor is suppressed from flowing from the evaporator back to the liquid pipe. The porous body is formed with a plurality of pores. Each of the pores is formed as a bottomed hole formed on one surface-side of a metal layer and a bottomed hole formed on the other surface-side partially communicate with each other (for example, refer to Japanese Patent No. 6,291,000 and Japanese Patent No. 6,400,240).

A loop-type heat pipe according to the preamble of claim 1 is disclosed in CN 108267037 A. A vapor pipe branches into to heat pipes through a three-way joint. The heat pipes are connected at their other end with a further three-way joint which connects the heat pipes with a liquid return pipe. A loop heat pipe with a flat evaporator and two condensing devices is described in US 2008/0164010 A1. A capillary evaporator for a diphasic loop of energy transfer between a hot source and a cold source is disclosed in US 6058711.

In recent years, an amount of heat generation in a heat generation component increases as a signal processing speed is improved, so that it may be difficult to sufficiently radiate heat in the loop-type heat pipe of the related art.

### SUMMARY OF INVENTION

Aspect of non-limiting embodiments of the present disclosure is to provide a loop-type heat pipe capable of radiating more heat to an outside.

A loop-type heat pipe according to the non-limiting embodiment of the present disclosure comprises:
an evaporator configured to vaporize an operating fluid;
a first condenser and a second condenser configured to condense the operating fluid;
a liquid pipe connecting the evaporator and the first condenser and second condenser;
a first vapor pipe connecting the evaporator and the first condenser; and
a second vapor pipe connecting the evaporator and the second condenser,
wherein the liquid pipe comprises:
   a first liquid pipe having a first flow path and connected to the first condenser,
   a second liquid pipe having a second flow path and connected to the second condenser, and
   a third liquid pipe having a third flow path connecting to the first flow path and the second flow path and connected to the evaporator, wherein the evaporator, the first vapor pipe, the first condenser, the first liquid pipe and the third liquid pipe forming a loop-shaped flow path, and wherein the evaporator, the second vapor pipe, the second condenser, the second liquid pipe and the third liquid pipe forming a loop-shaped flow path.

According to the present disclosure, it is possible to radiate more heat to the outside.

### BRIEF DESCRIPTION OF DRAWINGS

FIG. 1 is a schematic plan view depicting a loop-type heat pipe in accordance with a first embodiment.
FIG. 2 is a sectional view depicting an evaporator and a surrounding thereof of the loop-type heat pipe in accordance with the first embodiment.
FIG. 3 is a schematic plan view depicting the evaporator and a liquid pipe of the loop-type heat pipe in accordance with the first embodiment.
FIG. 4A is a sectional view (1 thereof) exemplifying the liquid pipe of the loop-type heat pipe in accordance with the first embodiment.
FIG. 4B is a sectional view (1 thereof) exemplifying the liquid pipe of the loop-type heat pipe in accordance with the first embodiment.
FIG. 5 is a sectional view (2 thereof) exemplifying the liquid pipe of the loop-type heat pipe in accordance with the first embodiment.
FIG. 6 is a schematic plan view depicting an evaporator and a liquid pipe of a loop-type heat pipe in accordance with a second embodiment.
FIG. 7 is a schematic plan view depicting an evaporator and a liquid pipe of a loop-type heat pipe in accordance with a third embodiment.
FIG. 8 is a schematic plan view depicting an evaporator and a liquid pipe of a loop-type heat pipe in accordance with a fourth embodiment.
FIG. 9 is a schematic plan view depicting an evaporator and a liquid pipe of a loop-type heat pipe in accordance with a fifth embodiment.

### DESCRIPTION OF EMBODIMENTS

Hereinbelow, embodiments will be described with reference to the drawings. Note that, in the respective drawings, the same constitutional parts are denoted with the same reference signs, and the overlapping descriptions may be omitted.

### <First Embodiment>

### [Structure of Loop-Type Heat Pipe of First Embodiment]

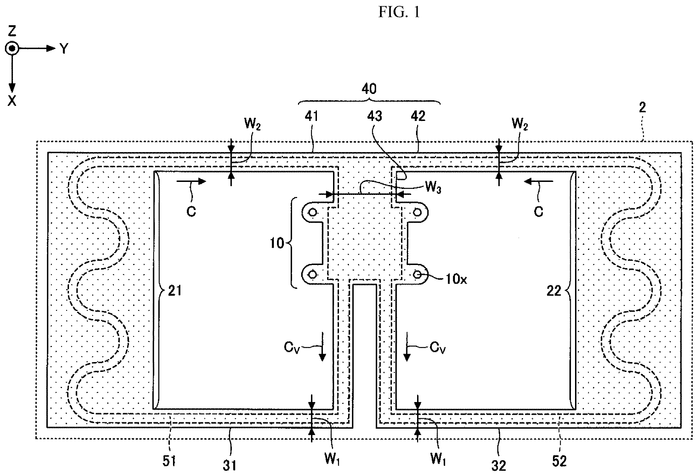

First, a structure of a loop-type heat pipe in accordance with a first embodiment is described. FIG. 1 is a schematic plan view exemplifying the loop-type heat pipe in accordance with the first embodiment.

Referring to FIG. 1, a loop-type heat pipe 1 includes an evaporator 10, a first condenser 21, a second condenser 22, a first vapor pipe 31, a second vapor pipe 32, and a liquid pipe 40. The liquid pipe 40 includes a first liquid pipe 41, a second liquid pipe 42, and a third liquid pipe 43. The loop-type heat pipe 1 can be accommodated in a mobile-type electronic device 2 such as a smart phone and a tablet terminal, for example.

In the loop-type heat pipe 1, the evaporator 10 has a function of vaporizing an operating fluid C to generate vapor Cv. The first condenser 21 and the second condenser 22 each have a function of condensing the vapor Cv of the operating fluid C. The first condenser 21 and the second condenser 22 may be arranged spaced from each other. The first liquid pipe 41 is connected to the first condenser 21, the second liquid pipe 42 is connected to the second condenser 22, and the third liquid pipe 43 is connected to the evaporator 10. The evaporator 10 and the first condenser 21 are connected to each other by the first vapor pipe 31, the first liquid pipe 41 and the third liquid pipe 43. The evaporator 10 and the second condenser 22 are connected to each other by the second vapor pipe 32, the second liquid pipe 42 and the third liquid pipe 43. The third liquid pipe 43 connects each of the first liquid pipe 41 and the second liquid pipe 42 with the evaporator 10. The first liquid pipe 41 and the second liquid pipe 42 may extend into different directions from the third liquid pipe 43.

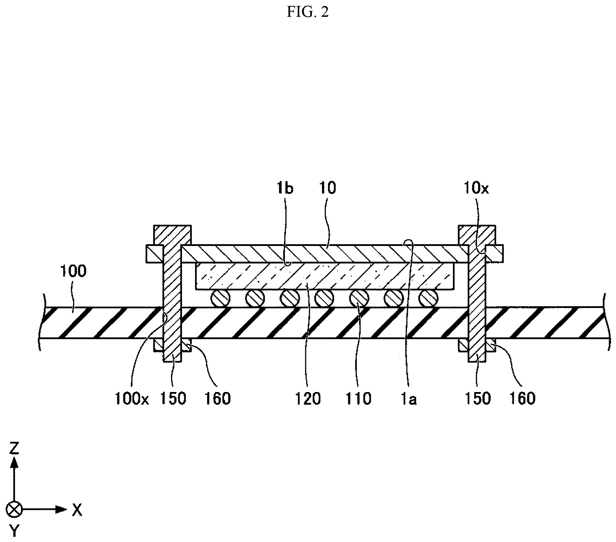

FIG. 2 is a sectional view depicting an evaporator and a surrounding thereof of the loop-type heat pipe in accordance with the first embodiment. As shown in FIGS. 1 and 2, the evaporator 10 is formed with, for example, four through-holes 10x. Bolts 150 are each inserted in each of the through-holes 10x formed in the evaporator 10 and each of through-holes 100x formed in a circuit substrate 100, and are fastened with nuts 160 from a lower surface-side of the circuit substrate 100, so that the evaporator 10 and the circuit substrate 100 are fixed to each other. The evaporator 10, the first condenser 21, the second condenser 22, the first vapor pipe 31, the second vapor pipe 32, the first liquid pipe 41, the second liquid pipe 42 and the third liquid pipe 43 have an upper surface 1a and a lower surface 1b opposite to the upper surface 1a.

A heat generation component 120 such as a CPU is mounted on the circuit substrate 100 by bumps 110, and an upper surface of the heat generation component 120 is closely contacted to the lower surface 1b of the evaporator 10. The operating fluid C in the evaporator 10 is vaporized by heat generated in the heat generation component 120, so that the vapor Cv is generated.

As shown in FIG. 1, the vapor Cv generated in the evaporator 10 is guided to the first condenser 21 through the first vapor pipe 31 and is condensed in the first condenser 21, and is also guided to the second condenser 22 through the second vapor pipe 32 and is condensed in the second condenser 22. Thereby, heat generated in the heat generation component 120 is moved to the first condenser 21 and the second condenser 22, so that temperature rise in the heat generation component 120 is suppressed. The operating fluid C condensed in the first condenser 21 is guided to the evaporator 10 through the first liquid pipe 41 and the third liquid pipe 43. The operating fluid C condensed in the second condenser 22 is guided to the evaporator 10 through the second liquid pipe 42 and the third liquid pipe 43. A width W₁ of each of the first vapor pipe 31 and the second vapor pipe 32 may be set to about 8mm, for example. A width W₂ of each of the first liquid pipe 41 and the second liquid pipe 42 may be set to about 6mm, for example. A width W₃ of the third liquid pipe 43 may be set to about 20mm, for example. The width W₃ of the third liquid pipe 43 may be larger than the width W₂ of each of the first liquid pipe 41 and the second liquid pipe 42.

A type of the operating fluid C is not particularly limited. However, a fluid having a high vapor pressure and a high evaporative latent heat is preferably used so as to effectively cool the heat generation component 120 by the evaporative latent heat. Examples of such a fluid may include ammonia, water, Freon, alcohol and acetone.

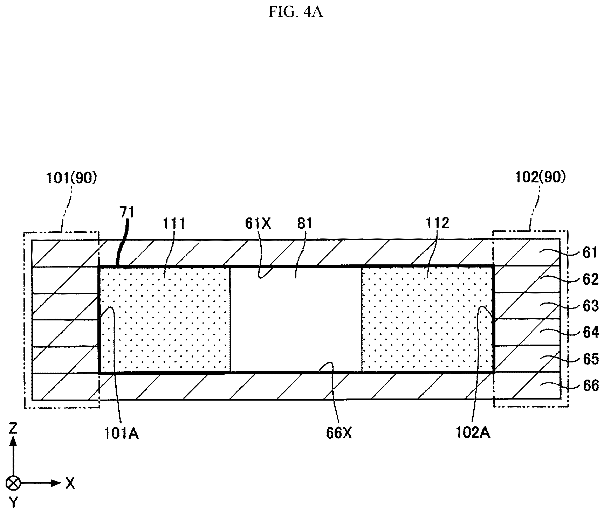

The evaporator 10, the first condenser 21, the second condenser 22, the first vapor pipe 31, the second vapor pipe 32, the first liquid pipe 41, the second liquid pipe 42 and the third liquid pipe 43 may each have a structure where a plurality of metal layers is stacked, for example. As described later, the evaporator 10, the first condenser 21, the second condenser 22, the first vapor pipe 31, the second vapor pipe 32, the first liquid pipe 41, the second liquid pipe 42 and the third liquid pipe 43 each have a structure where six layers of metal layers 61 to 66 are stacked (refer to FIGS. 4A to 5).

The metal layers 61 to 66 are copper layers having high heat conductivity, for example, and are directly bonded to each other by solid-phase bonding and the like. A thickness of each of the metal layers 61 to 66 may be set to about 50µm to 200µm, for example. Note that, the metal layers 61 to 66 are not limited to the copper layers and may be formed of stainless steel, aluminum, magnesium alloy and the like. The number of the stacked metal layers is not particularly limited. For example, five or less metal layers or seven or more metal layers may be stacked.

As used herein, the solid-phase bonding is a method of heating and softening bonding targets in a solid state without melting the same, and then further pressing, plastically deforming and bonding the bonding targets. All materials of the metal layers 61 to 66 are preferably the same so that the metal layers adjacent to each other can be favorably bonded by the solid-phase bonding.

As shown in FIGS. 4A to 5, the evaporator 10, the first condenser 21, the second condenser 22, the first vapor pipe 31, the second vapor pipe 32, the first liquid pipe 41, the second liquid pipe 42 and the third liquid pipe 43 each have pipe walls 90, each of which is constituted by all the stacked metal layers 61 to 66, at both end portions in a direction orthogonal to both a flowing direction of the operating fluid C or the vapor Cv and a stacking direction of the metal layers 61 to 66.

As shown in FIG. 1, the evaporator 10, the first vapor pipe 31, the first condenser 21, the first liquid pipe 41 and the third liquid pipe 43 are formed with a loop-shaped flow path 51. The evaporator 10, the second vapor pipe 32, the second condenser 22, the second liquid pipe 42 and the third liquid pipe 43 are formed with a loop-shaped flow path 52. For example, the flow paths 51 and 52 are all surrounded by both inner wall surfaces of the two pipe walls 90, a lower surface of the metal layer 61 and an upper surface of the metal layer 66. The operating fluid C or the vapor Cv flows in the flow paths 51 and 52. As described later, parts of the flow paths 51 and 52 are provided with porous bodies, and a remaining part of the flow paths 51 and 52 is a space.

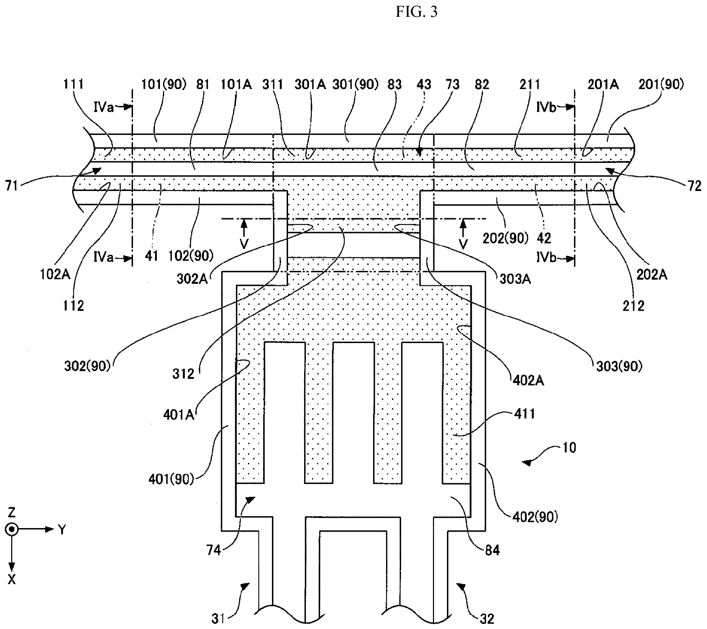

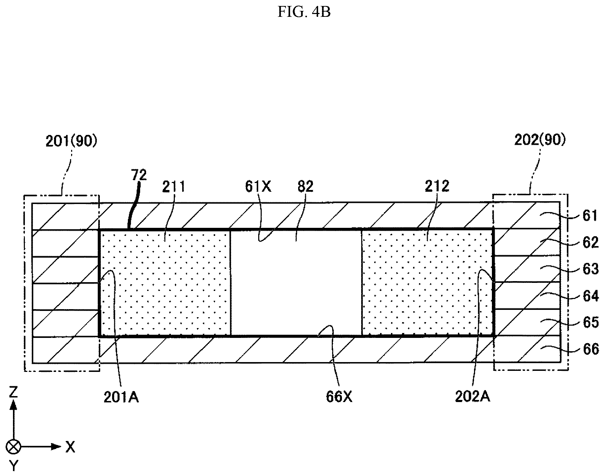

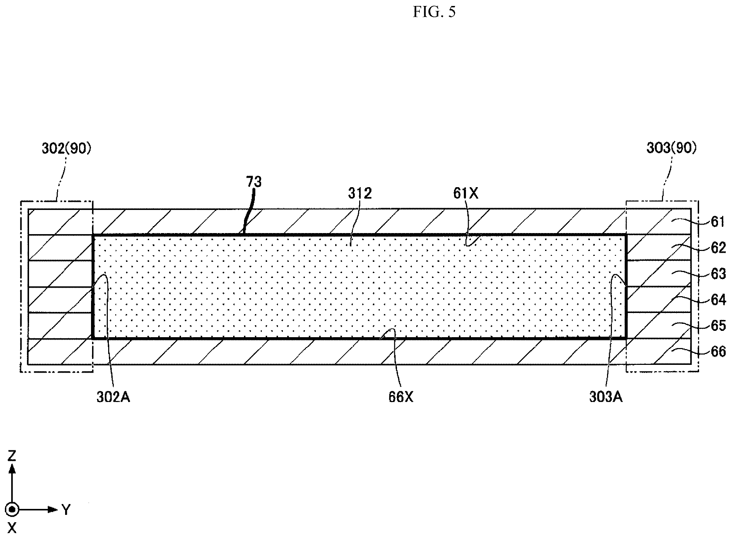

Here, structures of the evaporator 10 and the liquid pipe 40 are described. FIG. 3 is a schematic plan view depicting the evaporator 10 and the liquid pipe 40 of the loop-type heat pipe in accordance with the first embodiment. FIGS. 4A to 5 are sectional views exemplifying the liquid pipe 40 of the loop-type heat pipe in accordance with the first embodiment. In FIG. 3, a metal layer (the metal layer 61 shown in FIGS. 4A to 5) that is the outermost layer on one side is not shown. FIG. 4A is a sectional view taken along a line IVa-IVa of FIG. 3, exemplifying the first liquid pipe 41. FIG. 4B is a sectional view taken along a line IVb-IVb of FIG. 3, exemplifying the second liquid pipe 42. FIG. 5 is a sectional view taken along a line V-V of FIG. 3, exemplifying the third liquid pipe 43. In FIGS. 3 to 5, a stacking direction of the metal layers 61 to 66 is denoted as the Z direction, any direction in a plane orthogonal to the Z direction is denoted as the X direction, and a direction in the plane orthogonal to the X direction is denoted as the Y direction (the same also applies to the other drawings). In the present disclosure, the description "as seen from above" means seeing in the Z direction.

As shown in FIGS. 3 and 4A, the first liquid pipe 41 has a first flow path 71. The first flow path 71 is a part of the flow path 51. The first liquid pipe 41 has pipe walls 101 and 102. The pipe walls 101 and 102 are parts of the pipe wall 90. The first flow path 71 is surrounded by an inner wall surface 101A of the pipe wall 101, an inner wall surface 102A of the pipe wall 102, a lower surface 61X of the metal layer 61, and an upper surface 66X of the metal layer 66. The first liquid pipe 41 includes, for example, first porous bodies 111 and 112 provided in the first flow path 71. The first porous body 111 is provided in contact with the inner wall surface 101A of the pipe wall 101, and the first porous body 112 is provided in contact with the inner wall surface 102A of the pipe wall 102. For example, the first porous body 111 is formed integrally with the pipe wall 101, and the first porous body 112 is formed integrally with the pipe wall 102. The first porous bodies 111 and 112 include, for example, a plurality of pores (not shown) formed in the metal layers 62 to 65.

A first space 81 in which the operating fluid C flows is formed between the first porous body 111 and the first porous body 112. The first space 81 is surrounded by surfaces of the first porous bodies 111 and 112 facing each other, the lower surface 61X of the metal layer 61, and the upper surface 66X of the metal layer 66.

As shown in FIGS. 3 and 4B, the second liquid pipe 42 has a second flow path 72. The second flow path 72 is a part of the flow path 52. The second liquid pipe 42 has pipe walls 201 and 202. The pipe walls 201 and 202 are parts of the pipe wall 90. The second flow path 72 is surrounded by an inner wall surface 201A of the pipe wall 201, an inner wall surface 202A of the pipe wall 202, the lower surface 61X of the metal layer 61, and the upper surface 66X of the metal layer 66. The second liquid pipe 42 includes, for example, second porous bodies 211 and 212 in the second flow path 72. The second porous body 211 is provided in contact with the inner wall surface 201A of the pipe wall 201, and the second porous body 212 is provided in contact with the inner wall surface 202A of the pipe wall 202. For example, the second porous body 211 is formed integrally with the pipe wall 201, and the second porous body 212 is formed integrally with the pipe wall 202. The second porous bodies 211 and 212 include, for example, a plurality of pores (not shown) formed in the metal layers 62 to 65.

A second space 82 in which the operating fluid C flows is formed between the second porous body 211 and the second porous body 212. The second space 82 is surrounded by surfaces of the second porous bodies 211 and 21 facing each other, the lower surface 61X of the metal layer 61, and the upper surface 66X of the metal layer 66.

For example, the pipe walls 101, 102, 201 and 202 extend in the Y direction in the vicinity of the third liquid pipe 43.

As shown in FIGS. 3 and 5, the third liquid pipe 43 has a third flow path 73 connecting to the first flow path 71 and the second flow path 72. The third flow path 73 is a part of the flow path 51, and is also a part of the flow path 52. The third liquid pipe 43 has pipe walls 301, 302 and 303. The pipe wall 301 is provided between the pipe walls 101 and 201, and continues to the pipe walls 101 and 201. The pipe wall 301 extends in the Y direction, similarly to the pipe walls 101 and 201. The pipe wall 302 continues to the pipe wall 102, and extends in the X direction toward the evaporator 10. The pipe wall 303 continues to the pipe wall 202, and extends in the X direction toward the evaporator 10. The pipe walls 301, 302 and 303 are parts of the pipe wall 90. The third flow path 73 is surrounded by an inner wall surface 301A of the pipe wall 301, an inner wall surface 302A of the pipe wall 302, an inner wall surface 303A of the pipe wall 303, the lower surface 61X of the metal layer 61, and the upper surface 66X of the metal layer 66.

The third liquid pipe 43 includes, for example, third porous bodies 311 and 312 in the third flow path 73. The third porous body 311 is provided between the first porous body 111 and the second porous body 211, and continues to the first porous body 111 and the second porous body 211. The third porous body 311 is provided in contact with the inner wall surface 301A of the pipe wall 301. The third porous body 312 is provided between the first porous body 112 and the second porous body 212, and continues to the first porous body 112 and the second porous body 212. The third porous body 312 fills an inside of the third liquid pipe 43 between the pipe wall 302 and the pipe wall 303, in one section (for example, a section shown in FIG. 5) perpendicular to the X direction, for example. That is, the third porous body 311 is provided in contact with the inner wall surface 302A of the pipe wall 302, the inner wall surface 303A of the pipe wall 303, the lower surface 61X of the metal layer 61, and the upper surface 66X of the metal layer 66. For example, the third porous body 311 is formed integrally with the pipe wall 301, and the third porous body 312 is formed integrally with the pipe walls 302 and 303. The third porous bodies 311 and 312 include, for example, a plurality of pores (not shown) formed in the metal layers 62 to 65.

A third space 83 in which the operating fluid C flows is formed between the third porous body 311 and the third porous body 312. The third space 83 is configured to communicate with the first space 81 and the second space 82. For example, the first space 81, the third space 83 and the second space 82 extend in the Y direction. The third space 83 is surrounded by surfaces of the third porous bodies 311 and 312 facing each other, the lower surface 61X of the metal layer 61, and the upper surface 66X of the metal layer 66.

In this way, the first liquid pipe 41 is provided with the first porous bodies 111 and 112, the second liquid pipe 42 is provided with the second porous bodies 211 and 212, the third liquid pipe 43 is provided with the third porous bodies 311 and 312, and the third porous body 312 is arranged in the vicinity of the evaporator 10. Thereby, the capillary force generated in the porous bodies guide the liquid operating fluid C in the liquid pipe 40 to the evaporator 10.

As a result, even when the vapor Cv intends to flow back in the liquid pipe 40 due to heat leak from the evaporator 10, for example, the vapor Cv can be pushed and returned by the capillary force acting from the porous bodies in the liquid pipe 40 to the liquid operating fluid C, so that the vapor Cv can be prevented from flowing back.

As shown in FIG. 3, the evaporator 10 has a fourth flow path 74. The fourth flow path 74 is a part of the flow path 51, and is also a part of the flow path 52. The evaporator 10 has pipe walls 401 and 402. The pipe wall 401 continues to the pipe wall 302, and the pipe wall 402 continues to the pipe wall 303. The pipe walls 401 and 402 are parts of the pipe wall 90. The evaporator 10 is surrounded by an inner wall surface 401A of the pipe wall 401, an inner wall surface 402A of the pipe wall 402, the lower surface 61X of the metal layer 61, and the upper surface 66X of the metal layer 66. The evaporator 10 includes, for example, a fourth porous body 411 having a comb-teeth shape in plan view in the fourth flow path 74. The fourth porous body 411 may be provided in contact with the inner wall surface 401A of the pipe wall 401, the inner wall surface 402A of the pipe wall 402, the lower surface 61X of the metal layer 61, and the upper surface 66X of the metal layer 66. For example, the fourth porous body 411 is formed integrally with the pipe walls 401 and 402. The fourth porous body 411 includes, for example, a plurality of pores (not shown) formed in the metal layers 62 to 65.

In the evaporator 10, a region in which the fourth porous body 411 is not provided is formed with a space 84. The space 84 connects to the flow path 51 of the first vapor pipe 31 and the flow path 52 of the second vapor pipe 32. In the space 84, the vapor Cv of the operating fluid C flows.

The operating fluid C is guided from the liquid pipe 40-side to the evaporator 10, and permeates into the fourth porous body 411. The operating fluid C permeating into the fourth porous body 411 in the evaporator 10 is vaporized by heat generated in the heat generation component 120, so that the vapor Cv is generated. The vapor Cv flows into the first vapor pipe 31 and the second vapor pipe 32 through the space 84 in the evaporator 10. Note that, in FIG. 3, the number of protrusions (comb teeth) is set to four as an example. That is, the number of protrusions (comb teeth) can be set as appropriate. When a contact area between the protrusions and the space 84 increases, the operating fluid C is likely to evaporate and the pressure loss is likely to be reduced.

Note that, the liquid pipe 40 is formed with an injection port (not shown) for injecting the operating fluid C. The injection port is used to inject the operating fluid C, and is blocked after the operating fluid C is injected. Therefore, the loop-type heat pipe 1 is kept airtight.

In the first embodiment, since the first condenser 21 and the second condenser 22 are provided for one evaporator 10, a heat radiation area is increased, so that the heat applied to the evaporator 10 is likely to be radiated. In addition, since the third liquid pipe 43 includes the third flow path 73 connecting to the first flow path 71 and the second flow path 72, the operating fluid C flowing through the first flow path 71 and the operating fluid C flowing through the second flow path 72 join and are supplied to the evaporator 10 via the third flow path 73. Therefore, even when there is a difference of easiness of heat radiation between the first condenser 21 and the second condenser 22, the liquid operating fluid C can be continuously stably supplied to the evaporator 10. That is, according to the first embodiment, it is possible to efficiently radiate the heat while suppressing dryout.

In addition, as described above, the operating fluid C is injected from the injection port into the liquid pipe 40. In the first embodiment, since the first space 81 and the second space 82 communicate with each other with the third space 83 being interposed therebetween, the operating fluid C injected into the liquid pipe 40 can rapidly easily spread into the first liquid pipe 41 and the second liquid pipe 42.

Note that, the porous bodies may also be provided in parts of the first condenser 21 and the second condenser 22, or may also be provided in parts of the first vapor pipe 31 and the second vapor pipe 32.

### <Second Embodiment>

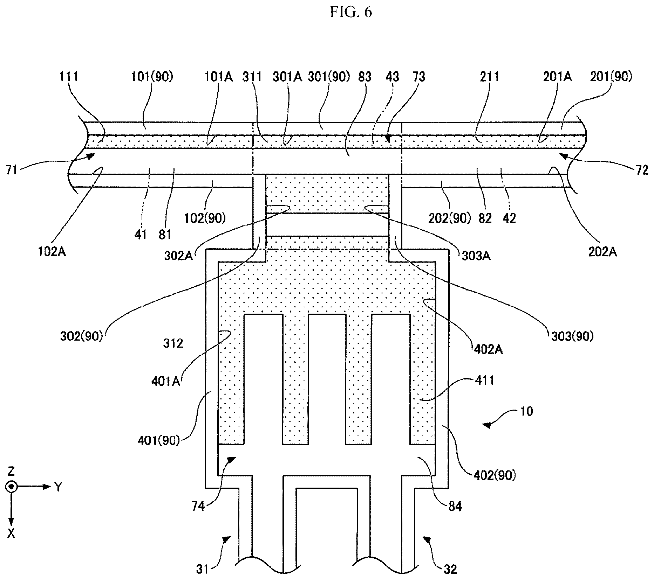

In a second embodiment, the configuration of the liquid pipe 40 is different from the first embodiment. In the second embodiment, the descriptions of the same constitutional parts as the above-described embodiment may be omitted. FIG. 6 is a schematic plan view depicting the evaporator 10 and the liquid pipe 40 of a loop-type heat pipe in accordance with the second embodiment. In FIG. 6, the metal layer (the metal layer 61 shown in FIGS. 4A to 5) that is the outermost layer on one side is not shown.

As shown in FIG. 6, in the second embodiment, the first liquid pipe 41 includes the first porous body 111 but does not include the first porous body 112. The first space 81 is formed between the first porous body 111 and the pipe wall 102. The second liquid pipe 42 includes the second porous body 211 but does not include the second porous body 212. The second space 82 is formed between the second porous body 211 and the pipe wall 202. The third liquid pipe 43 includes the third porous bodies 311 and 312. However, the third porous body 312 is provided only between the pipe wall 302 and the pipe wall 303.

The other configurations are similar to the first embodiment.

Also in the second embodiment, the similar effects to the first embodiment can be achieved. In addition, as compared to the first embodiment, when the sectional areas of the first flow path 71 and the second flow path 72 are the same, volumes of the first space 81, the second space 82 and the third space 83 are large. Therefore, it is possible to store more operating fluid C in the vicinity of the evaporator 10.

### <Third Embodiment>

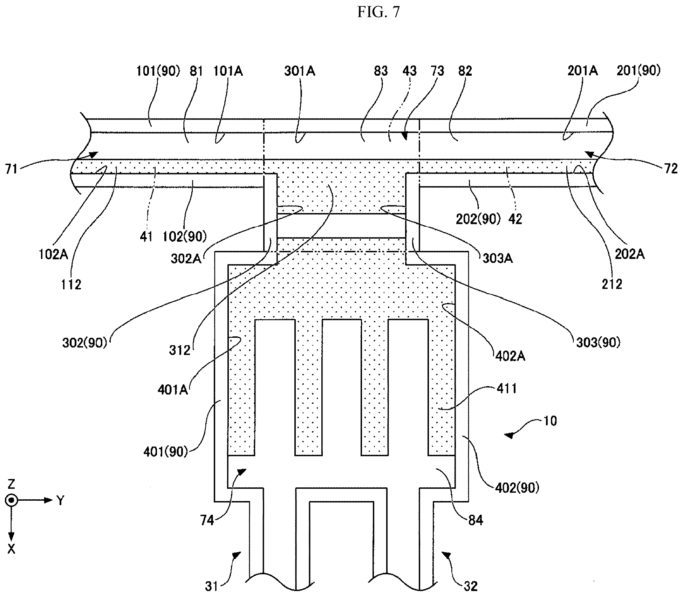

In a third embodiment, the configuration of the liquid pipe 40 is different from the first embodiment. In the third embodiment, the descriptions of the same constitutional parts as the above-described embodiments may be omitted. FIG. 7 is a schematic plan view depicting the evaporator 10 and the liquid pipe 40 of a loop-type heat pipe in accordance with the third embodiment. In FIG. 7, the metal layer (the metal layer 61 shown in FIGS. 4A to 5) that is the outermost layer on one side is not shown.

As shown in FIG. 7, in the third embodiment, the first liquid pipe 41 includes the first porous body 112 but does not include the first porous body 111. The first space 81 is formed between the first porous body 112 and the pipe wall 101. The second liquid pipe 42 includes the second porous body 212 but does not include the second porous body 211. The second space 82 is formed between the second porous body 212 and the pipe wall 201. The third liquid pipe 43 includes the third porous body 312 but does not include the third porous body 311. The third space 83 is formed between the third porous body 312 and the pipe wall 301.

The other configurations are similar to the first embodiment.

Also in the third embodiment, the similar effects to the first embodiment can be achieved. In addition, as compared to the first embodiment, when the sectional areas of the first flow path 71 and the second flow path 72 are the same, volumes of the first space 81, the second space 82 and the third space 83 are large. Therefore, it is possible to store more operating fluid C in the vicinity of the evaporator 10.

### <Fourth Embodiment>

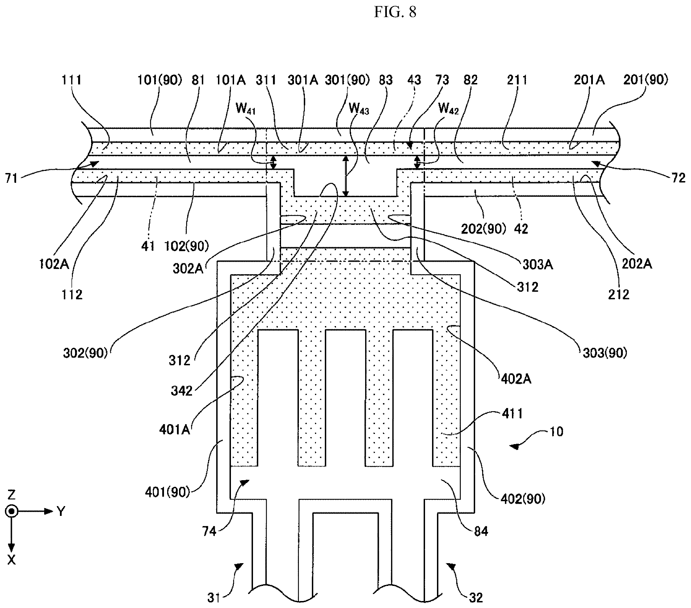

In a fourth embodiment, the configuration of the liquid pipe 40 is different from the first embodiment. In the fourth embodiment, the descriptions of the same constitutional parts as the above-described embodiments may be omitted. FIG. 8 is a schematic plan view depicting the evaporator 10 and the liquid pipe 40 of a loop-type heat pipe in accordance with the fourth embodiment. In FIG. 8, the metal layer (the metal layer 61 shown in FIGS. 4A to 5) that is the outermost layer on one side is not shown.

As shown in FIG. 8, in the fourth embodiment, the third porous body 312 is formed with a concave portion 342 that is concave toward the evaporator 10, as seen from above. The concave portion 342 is formed on a further pipe wall 303-side than the inner wall surface 302A of the pipe wall 302 and on a further pipe wall 302-side than the inner wall surface 303A of the pipe wall 303, in the Y direction. As seen from above, a third width W₄₃ of the third space 83 in a portion at which the concave portion 342 is formed is greater than a first width W₄₁ of the third space 83 at a boundary with the first space 81 and a second width W₄₂ of the third space 83 at a boundary with the second space 82. That is, as seen from above, the third space 83 has the first width W₄₁ at the boundary with the first space 81, the second width W₄₂ at the boundary with the second space 82, and the third width W₄₃ greater than the first width W₄₁ and the second width W₄₂ between the boundary with the first space 81 and the boundary with the second space 82.

The other configurations are similar to the first embodiment.

Also in the fourth embodiment, the similar effects to the first embodiment can be achieved. In addition, as compared to the first embodiment, when the sectional areas of the first flow path 71 and the second flow path 72 are the same, volume of the third space 83 is large. Therefore, it is possible to store more operating fluid C in the vicinity of the evaporator 10.

### <Fifth Embodiment>

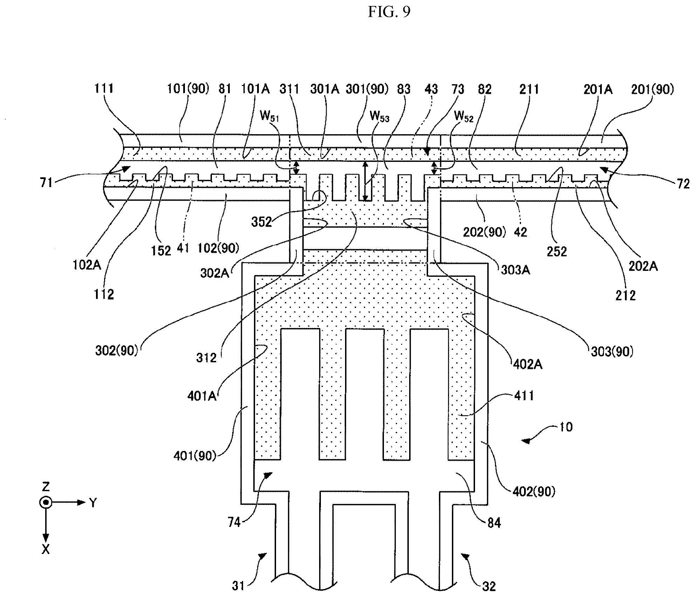

In a fifth embodiment, the configuration of the liquid pipe 40 is different from the first embodiment. In the fifth embodiment, the descriptions of the same constitutional parts as the above-described embodiments may be omitted. FIG. 9 is a schematic plan view depicting the evaporator 10 and the liquid pipe 40 of a loop-type heat pipe in accordance with the fifth embodiment. In FIG. 9, the metal layer (the metal layer 61 shown in FIGS. 4A to 5) that is the outermost layer on one side is not shown.

As shown in FIG. 9, in the fifth embodiment, the third porous body 312 is formed with a plurality of concave portions 352 that is concave toward the evaporator 10, as seen from above. The plurality of concave portions 352 is formed on a further pipe wall 303-side than the inner wall surface 302A of the pipe wall 302 and on a further pipe wall 302-side than the inner wall surface 303A of the pipe wall 303, in the Y direction. As seen from above, a third width W₅₃ of the third space 83 in a portion at which the concave portion 352 is formed is greater than a first width W₅₁ of the third space 83 at a boundary with the first space 81 and a second width W₅₂ of the third space 83 at a boundary with the second space 82. That is, as seen from above, the third space 83 has the first width W₅₁ at the boundary with the first space 81, the second width W₅₂ at the boundary with the second space 82, and the third width W₅₃ greater than the first width W₅₁ and the second width W₅₂ between the boundary with the first space 81 and the boundary with the second space 82.

In addition, the first porous body 112 is formed with a plurality of concave portions 152 that is concave toward the pipe wall 102, as seen from above. The plurality of concave portions 152 is formed side by side along the pipe wall 102. The second porous body 212 is also formed with a plurality of concave portions 252 that is concave toward the pipe wall 202, as seen from above. The plurality of concave portions 252 is formed side by side along the pipe wall 202.

Also in the fifth embodiment, the similar effects to the first embodiment can be achieved. In addition, as compared to the first embodiment, when the sectional areas of the first flow path 71 and the second flow path 72 are the same, volumes of the first space 81, the second space 82 and the third space 83 are large. Therefore, it is possible to store more operating fluid C in the vicinity of the evaporator 10.

Note that, the number of the condensers is not limited to two. For example, three or more condensers may be connected to the evaporator via the vapor pipe and the liquid pipe.

Note that the concave portion 342 in the third porous body 312 of the fourth embodiment and each of the plurality of concave portions 352 and each of the plurality of concave portions 252 in the fifth embodiment are different from the bottomed hole of the pores of the porous body and the size of the concave portions are larger than the bottomed hole of the pores of the porous body.

Although the preferred embodiments have been described in detail, the present disclosure is not limited to the above-described embodiments and the embodiments can be diversely modified and replaced without departing from the scope of the invention which is defined in the claims.

## Claims

1. A loop-type heat pipe (1) comprising:
an evaporator (10) configured to vaporize an operating fluid;
a first condenser (21) and a second condenser (22) configured to condense the operating fluid;
a liquid pipe (40) connecting the evaporator (10) and the first condenser (21) and second condenser (22);
wherein the liquid pipe (40) comprises:
a first liquid pipe (41) having a first flow path (71) and connected to the first condenser (21),
a second liquid pipe (42) having a second flow path (72) and connected to the second condenser (22), and
a third liquid pipe (43) having a third flow path (73) connecting to the first flow path (71) and the second flow path (72) and connected to the evaporator (10), **characterised by**:
a first vapor pipe (31) connecting the evaporator (10) and the first condenser (21);
a second vapor pipe (32) connecting the evaporator (10) and the second condenser (22),
wherein the evaporator (10), the first vapor pipe (31), the first condenser (21), the first liquid pipe (41) and the third liquid pipe (43) are forming a loop-shaped flow path (51), and
wherein the evaporator (10), the second vapor pipe (32), the second condenser (22), the second liquid pipe (42) and the third liquid pipe (43) are forming a loop-shaped flow path (52).

2. The loop-type heat pipe according to Claim 1, wherein both the operating fluid flowing through the first flow path (71) and the operating fluid flowing through the second flow path (72) flow into the evaporator (10) via the third flow path (73).

3. The loop-type heat pipe according to Claim 1 or 2, wherein the first liquid pipe (41) includes a first space (81),
wherein the second liquid pipe (42) includes a second space (82), and
wherein the third liquid pipe (43) includes a third space (83) configured to communicate with the first space (81) and the second space (82).

4. The loop-type heat pipe according to Claim 3, wherein as seen from above, the third space (83) has a first width at a boundary with the first space (81), a second width at a boundary with the second space (82), and a third width greater than the first width and the second width between the boundary with the first space (81) and the boundary with the second space (82).

5. The loop-type heat pipe according to one of Claims 1 to 4, wherein the first liquid pipe (41) comprises a first porous body (111, 112),
wherein the second liquid pipe (42) comprises a second porous body (211, 212), and
wherein the third liquid pipe (43) comprises a third porous body (311, 312) continuing to the first porous body (111, 112) and the second porous body (211, 212).

6. The loop-type heat pipe according to one of Claims 1 to 5, wherein each of the evaporator (10), the first condenser (21), the second condenser (22), the liquid pipe (40), the first vapor pipe (31) and the second vapor pipe (31) is constituted by a plurality of stacked metal layers (61-66).

## Patentansprüche

1. Ein Kreislaufwärmerohr (1), aufweisend:
einen Verdampfer (10), der konfiguriert ist, ein Arbeitsfluid zu verdampfen;
einen ersten Kondensator (21) und einen zweiten Kondensator (22), die konfiguriert sind, das Arbeitsfluid zu kondensieren;
eine Flüssigkeitsleitung (40), die den Verdampfer (10) und den ersten Kondensator (21) und den zweiten Kondensator (22) verbindet;
wobei die Flüssigkeitsleitung (40) aufweist:
eine erste Flüssigkeitsleitung (41), die einen ersten Strömungspfad (71) aufweist und mit dem ersten Kondensator (21) verbunden ist,
eine zweite Flüssigkeitsleitung (42), die einen zweiten Strömungspfad (72) aufweist und mit dem zweiten Kondensator (22) verbunden ist, und
eine dritte Flüssigkeitsleitung (43), die einen dritten Strömungspfad (73) aufweist, der mit dem ersten Strömungspfad (71) und dem zweiten Strömungspfad (72) verbunden ist, und mit dem Verdampfer (10) verbunden ist,
**gekennzeichnet durch**:
eine erste Dampfleitung (31), die den Verdampfer (10) und den ersten Kondensator (21) verbindet; und
eine zweite Dampfleitung (32), die den Verdampfer (10) und den zweiten Kondensator (22) verbindet,
wobei der Verdampfer (10), die erste Dampfleitung (31), der erste Kondensator (21), die erste Flüssigkeitsleitung (41) und die dritte Flüssigkeitsleitung (43) einen schleifenförmigen Strömungspfad (51) bilden, und
wobei der Verdampfer (10), die zweite Dampfleitung (32), der zweite Kondensator (22), die zweite Flüssigkeitsleitung (42) und die dritte Flüssigkeitsleitung (43) einen schleifenförmigen Strömungspfad (52) bilden.

2. Kreislaufwärmerohr nach Anspruch 1, wobei sowohl das durch den ersten Strömungspfad (71) strömende Arbeitsfluid als auch das durch den zweiten Strömungspfad (72) strömende Arbeitsfluid mittels des dritten Strömungspfades (73) in den Verdampfer (10) fließen.

3. Kreislaufwärmerohr nach Anspruch 1 oder 2, wobei die erste Flüssigkeitsleitung (41) einen ersten Raum (81) aufweist,
wobei die zweite Flüssigkeitsleitung (42) einen zweiten Raum (82) aufweist, und
wobei die dritte Flüssigkeitsleitung (43) einen dritten Raum (83) aufweist, der derart konfiguriert ist, dass er mit dem ersten Raum (81) und dem zweiten Raum (82) kommuniziert.

4. Kreislaufwärmerohr nach Anspruch 3, wobei der dritte Raum (83), von oben betrachtet, eine erste Breite an einer Grenze zum ersten Raum (81), eine zweite Breite an einer Grenze zum zweiten Raum (82) und eine dritte Breite, die größer als die erste Breite und die zweite Breite ist, zwischen der Grenze zum ersten Raum (81) und der Grenze zum zweiten Raum (82) aufweist.

5. Kreislaufwärmerohr nach einem der Ansprüche 1 bis 4, wobei die erste Flüssigkeitsleitung (41) einen ersten porösen Körper (111, 112) aufweist,
wobei die zweite Flüssigkeitsleitung (42) einen zweiten porösen Körper (211, 212) aufweist, und
wobei die dritte Flüssigkeitsleitung (43) einen dritten porösen Körper (311, 312) aufweist, der sich an den ersten porösen Körper (111, 112) und den zweiten porösen Körper (211, 212) anschließt.

6. Kreislaufwärmerohr nach einem der Ansprüche 1 bis 5, wobei der Verdampfer (10), der erste Kondensator (21), der zweite Kondensator (22), die Flüssigkeitsleitung (40), die erste Dampfleitung (31) und die zweite Dampfleitung (31) jeweils aus einer Vielzahl von gestapelten Metallschichten (61-66) gebildet ist.

## Revendications

1. Caloduc de type boucle (1) comprenant :
un évaporateur (10) configuré pour vaporiser un fluide de travail ;
un premier condenseur (21) et un deuxième condenseur (22) configurés pour condenser le fluide de travail ;
un tuyau de liquide (40) raccordant l'évaporateur (10) et les premier condenseur (21) et deuxième condenseur (22) ;
dans lequel le tuyau de liquide (40) comprend :
un premier tuyau de liquide (41) ayant un premier trajet d'écoulement (71) et raccordé au premier condenseur (21),
un deuxième tuyau de liquide (42) ayant un deuxième trajet d'écoulement (72) et raccordé au deuxième condenseur (22), et
un troisième tuyau de liquide (43) ayant un troisième trajet d'écoulement (73) se raccordant au premier trajet d'écoulement (71) et au deuxième trajet d'écoulement (72) et raccordé à l'évaporateur (10), **caractérisé par** :
un premier tuyau de vapeur (31) raccordant l'évaporateur (10) au premier condenseur (21) ;
un deuxième tuyau de vapeur (32) raccordant l'évaporateur (10) et le deuxième condenseur (22),
dans lequel l'évaporateur (10), le premier tuyau de vapeur (31), le premier condenseur (21), le premier tuyau de liquide (411) et le troisième tuyau de liquide (43) forment un trajet d'écoulement en forme de boucle (51), et
dans lequel l'évaporateur (10), le deuxième tuyau de vapeur (32), le deuxième condenseur (22), le deuxième tuyau de liquide (42) et le troisième tuyau de liquide (43) forment un trajet d'écoulement en forme de boucle (52).

2. Tuyau de chaleur de type boucle selon la revendication 1, dans lequel à la fois le fluide de travail s'écoulant à travers le premier trajet d'écoulement (71) et le fluide de travail s'écoulant à travers le deuxième trajet d'écoulement (72) s'écoulent dans l'évaporateur (10) via le troisième trajet d'écoulement (73).

3. Caloduc de type boucle selon la revendication 1 ou 2, dans lequel le premier tuyau de liquide (41) comporte un premier espace (81),
dans lequel le deuxième tuyau de liquide (42) comporte un deuxième espace (82), et
dans lequel le troisième tuyau de liquide (43) comporte un troisième espace (83) configuré pour communiquer avec le premier espace (81) et le deuxième espace (82).

4. Caloduc de type boucle selon la revendication 3, dans lequel, vu du dessus, le troisième espace (83) a une première largeur au niveau d'une limite avec le premier espace (81), une deuxième largeur au niveau d'une limite avec le deuxième espace (82), et une troisième largeur supérieure à la première largeur et à la deuxième largeur entre la limite avec le premier espace (81) et la limite avec le deuxième espace (82).

5. Caloduc de type boucle selon l'une des revendications 1 à 4, dans lequel le premier tuyau de liquide (41) comprend un premier corps poreux (111, 112),
dans lequel le deuxième tuyau de liquide (42) comprend un deuxième corps poreux (211, 212), et
dans lequel le troisième tuyau de liquide (43) comprend un troisième corps poreux (311, 312) continuant vers le premier corps poreux (111, 112) et le deuxième corps poreux (211, 212).

6. Caloduc de type boucle selon l'une des revendications 1 à 5, dans lequel chacun de l'évaporateur (10), du premier condenseur (21), du deuxième condenseur (22), du tuyau de liquide (40), du premier tuyau de vapeur (31) et du deuxième tuyau de vapeur (31) est constitué par une pluralité de couches de métal empilées (61-66).
